# EUROPEAN PATENT APPLICATION

(11) **EP 1 369 860 A2**
(43) Date of publication of application: **10.12.2003**
(21) Application number: 03012107.3
(22) Date of filing: 28.05.2003
(51) Int. Cl.: G11B 7/24

(54) **Optical recording medium**

(30) Priority: 31.05.2002 JP 2002158438
(71) Applicant: TDK Corporation, Tokyo 103-8272 (JP)
(72) Inventor: Shingai, Hiroshi, TDK Corporation, Tokyo 103-8272 (JP); Utsunomiya, Hajime, TDK Corporation, Tokyo 103-8272 (JP)
(74) Representative: VOSSIUS & PARTNER

(57) **Abstract**

There is provided an optical recording medium formed based on a drastically new concept of forming a phase-change recording layer by using other elements than chalcogen. The optical recording medium (1) has a phase-change recording layer (5) thereof formed such that a reversible phase change of the phase-change recording layer (5) between an amorphous phase and a crystalline phase can be utilized. The phase-change recording layer (5) contains Sb as a main component and at least one element selected from the groups consisting of elements of other groups than group VIb and rare earth metal elements, as a sub-component, as e.g. Mn, Ge, In or Ag.

## Description

This invention relates to an optical recording medium having a phase-change recording layer.

In recent years, attention has been drawn to optical recording media on which high-density recording as well as additional writing and rewriting (overwriting) of recording information can be performed. The additionally writable and rewritable optical recording media include a phase-change optical recording medium on which information (recording information) is recorded by changing a crystalline state of a recording layer thereof by irradiation of a laser beam thereto, and from which the recorded information is reproduced by detecting changes in reflectivity caused by the changes in the crystalline state. This phase-change optical recording medium captures attention particularly with the capability of rewriting by modulation of the intensity of a single laser beam, and the capability of recording and reproducing information using an optical system having a simpler construction than an optical system for a magneto-optical recording medium.

In general, to record information on a rewritable phase-change optical recording medium, first, a whole recording layer is initialized to a crystalline state, and then a laser beam having a power (recording power) high enough to heat the recording layer to a temperature above a melting point is irradiated onto the phase-change optical recording medium. At this time, the recording layer of portions of the recording medium onto which the laser beam having the recording power is irradiated is melted, and then rapidly cooled, whereby amorphous recording marks are formed. On the other hand, to erase the recording marks from the rewritable phase-change optical recording medium, a laser beam having a power (erasing power) which can heat the recording layer to a temperature above a crystallization temperature is irradiated to the phase-change optical recording medium. At this time, the recording layer of portions of the recording medium onto which the laser beam having the erasing power is irradiated is heated to the temperature above the crystallization temperature, and then slowly cooled, whereby the recording marks (amorphous portions) are returned to the crystalline state (i.e. erased). Thus, in the rewritable phase-change optical recording medium, it is possible to perform rewriting by modulating the intensity of a single optical beam.

Known recording materials for forming a phase-change recording layer include GeTe, GeTeSe, GeTeS, GeSeS, GeSeSb, GeAsSe, InTe, SeTe, SeAs, Ge-Te-(Sn, Au, Pd), GeTeSeSb, Ge-Sb-Te, and Ag-In-Sb-Te. Particularly, in recent years, chalcogenide compounds, such as Ge-Sb-Te-based materials and Ag-In-Sb-Te-based materials, which contain an element (chalcogen) of the group VIb, such as Te and Se, in addition to Sb as a main component, are mainly used because a large difference in reflectivity between the crystalline state and the amorphous state and a relatively high stability of the amorphous state can be ensured. Today, as described above, it is taken for granted by those skilled in the art that a phase-change recording layer should contain chalcogen.

However, through evaluation of various phase-change optical recording media prepared by changing other component elements than Sb contained in a recording layer or proportions of elements composing a recording layer, the present inventor found that even a recording layer formed without using chalcogen can record information thereon similarly to conventional phase-change recording layers containing chalcogen.

It is an object of the invention to provide an optical recording medium formed based on a drastically new concept of forming a phase-change recording layer by using other elements than chalcogen.

To attain the above object, the present invention provides an optical recording medium having a phase-change recording layer formed such that a reversible phase change thereof between an amorphous phase and a crystalline phase can be utilized, wherein the phase-change recording layer contains Sb as a main component and at least one element selected from the group consisting of elements of other groups than group VIb and rare earth metal elements, as a sub-component.

The phase-change recording layer of the optical recording medium according to the invention contains Sb as a main component and at least one element (e.g. Mn and/or Ge) selected from the group consisting of elements of the other groups than the group VIb and rare earth metals, as a sub-component. Therefore, it is possible to form a phase-change recording layer by using other elements than chalcogen, and therefore an optical recording medium onto which information can be rewritten, without using chalcogen.

Preferably, the sub-component is at least one element selected from Mn and Ge.

Preferably, a content of the selected element in the recording layer is within a range of 5 to 40 atomic %.

In the above optical recording medium and its preferred embodiments, if the content (atomic %) of Sb as the main component in the phase-change recording layer is too much, the crystallization speed (speed of crystal transformation) is sharply reduced, which makes it difficult to erase or rewrite recording information. Further, when the content (atomic %) of Mn and/or Ge is too little, an effect of improving thermal stability in the amorphous state of the recording layer becomes insufficient, which degrades storage characteristics of the recording medium. This occurs when the content of Mn and/or Ge is below 5 atomic %. Therefore, by setting the content of Mn and/or Ge to be equal to or more than 5 atomic %, the above effect can be positively ensured. On the other hand, when the content of Mn and/or Ge is too much, the content of Sb is reduced, which sharply reduces the crystallization speed of the recording layer. Therefore, by setting the content of Mn and/or Ge to be equal to or less than 40 atomic %, a required crystallization speed can be obtained. For example, it is possible to rewrite information at a speed of 10 Mbps or more.

In this case, it is more preferable that the content of the selected element is within a range of 10 to 30 atomic %.

According to this preferred embodiment, by setting the content of Mn and/or Ge to be equal to or more than 10 atomic %, a sufficient thermal stability of the recording layer in the amorphous state can be more positively ensured, and by setting the same to be equal to or less than 30 atomic %, a high crystallization speed of the recording layer can be maintained.

In the above optical recording medium and its preferred embodiments, it is more preferred that the recording layer contains at least one element M selected from In and Ag, and is formed such that a content of the at least one element M is more than 0 atomic % and equal to or less than 15 atomic %.

The recording layer may contain not only the main component and the sub-component, but also other elements on an as-needed basis. According to this preferred embodiment, at least one element selected from In and Ag is used as such an additive. These additive elements have a function of increasing the crystallization temperature of the recording layer, thereby enhancing the storage characteristics of the recording medium. By setting the content of the additive element(s) in the recording layer to be less than 15 atomic %, it is possible to prevent the difference of reflectivity caused by the phase change from becoming too small to obtain a sufficient degree of modulation.

Further, it is preferred that the recording layer is formed to have a thickness within a range of 4 to 50 nm, and it is more preferred that the thickness is within a range of 13 to 30 nm. When the thickness is too small, growth of the crystalline phase is made difficult, and the change in reflectivity caused by the phase change becomes insufficient. On the other hand, when the thickness is too large, the thermal conductivity of the recording layer is increased, and the reflectivity and the degree of modulation are reduced, which makes it difficult to perform the recording.

It should be noted that the composition of the recording layer can be measured by EPMA (Electron Probe Microanalysis), X-ray microanalysis, ICP, or the like. Further, it is preferred that the recording layer is formed by a sputtering method. In this case, sputtering conditions are not particularly limited, but when a material containing a plurality of elements is sputtered, For example, an alloy target may be used, or alternatively, a multi-source sputtering method using a plurality of targets may be employed.

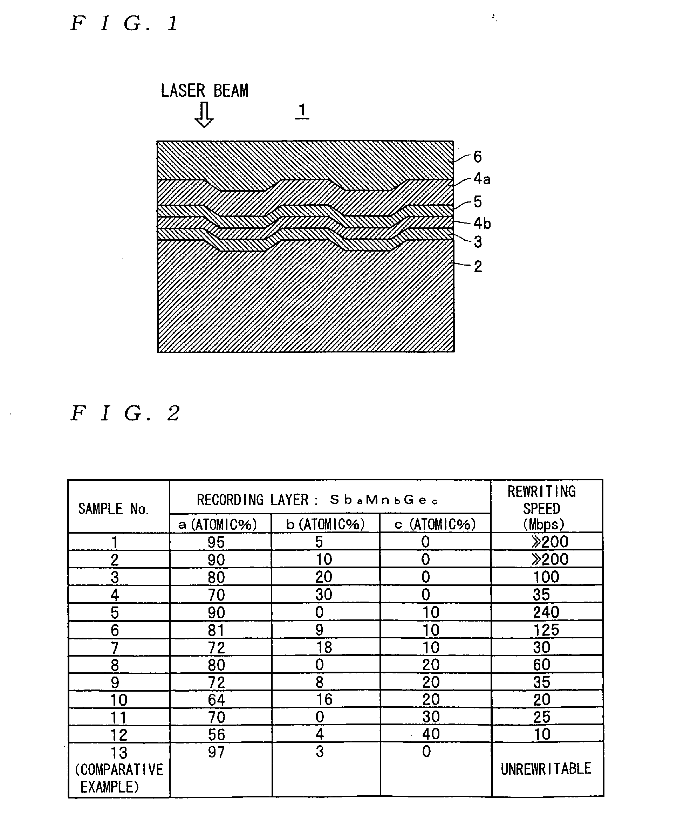

The optical recording medium according to the present invention is not particularly limited in construction except for the composition of the recording layer. For example, FIG. 1 shows an example of the construction of a general phase-change optical recording medium 1 according to an embodiment of the invention in which a reflection layer 3, a second dielectric layer 4b, a recording layer 5, a first dielectric layer 4a, and a light transmission layer 6 are sequentially deposited on a substrate 2. In this optical recording medium 1, a laser beam for recording/reproduction is irradiated to the recording layer 5 via the light transmission layer 6. However, it is also possible to construct an optical recording medium adapted to irradiation of a laser beam for recording/reproduction to a recording layer thereof via the substrate 2. In this case, although not shown, a first dielectric layer, a recording layer, a second dielectric layer, and a reflection layer are sequentially deposited on the substrate 2 in the mentioned order from the substrate side, and finally a protective layer is deposited thereon.

It should be noted that the disclosure of the present specification relates to the subject included in Japanese Patent Application No. 2002-158438 which was filed on May 31, 2002, and all of the disclosure thereby is expressly incorporated herein by reference.

These and other objects and features of the present invention will be explained in more detail below with reference to the attached drawings, wherein:

FIG. 1 is a cross-sectional view showing the construction of a recording medium according to an embodiment of the invention;

FIG. 2 is a diagram of a table showing results of experiments useful for explaining the relationship between the composition of a recording layer of each sample and the rewriting speed; and

FIG. 3 is a 3-component composition diagram useful for explaining the relationship between the composition of a recording layer of the FIG. 1 recording medium and the rewriting speed.

The invention will now be described in detail based on examples.

A polycarbonate disk having a diameter of 120 mm and a thickness of 1.1 mm, which was formed by injection molding such that grooves were simultaneously formed therein, was used as a substrate 2, and on the surface of the substrate 2, there were sequentially formed a reflection layer 3, a second dielectric layer 4b, a recording layer 5, a first dielectric layer 4a, and a light transmission layer 6, as shown in FIG. 1. A plurality of optical recording disks were thus prepared as Samples No. 1 to No. 13. In this case, the recording layer 5 of each of Samples No. 1 to No. 13 was formed such that it contains Sb as a main component, and at least one element selected from Mn and Ge as a sub-component (or as sub-components). FIG. 2 shows the composition of each recording layer. Samples No. 1 to No. 12 were formed as Examples, and Sample No. 13 was formed as Comparative Example.

The reflection layer 3 was formed by a sputtering method in an Ar atmosphere. A composition of Ag, Pd and Cu (= 98 : 1 : 1) was used as a target. Further, the reflection layer 3 was formed to have a thickness of 100 nm.

The second dielectric layer 4b was formed by a sputtering method in an Ar atmosphere by using an Al₂O₃ target. Further, the second dielectric layer 4b was formed to have a thickness of 7 nm. The recording layer 5 was formed by a ternary sputtering method in an Ar atmosphere by using an Sb target, an Mn target and a Ge target. Further, the recording layer 5 was formed to have a thickness of 14 nm. The first dielectric layer 4a was formed by a sputtering method in an Ar atmosphere by using a ZnS(80 mol%)-SiO₂(20 mol%) target. Further, the first dielectric layer 4a was formed to have a thickness of 110 nm. The light transmission layer 6 was formed from an ultraviolet-curing acrylic resin by a spin coating method.

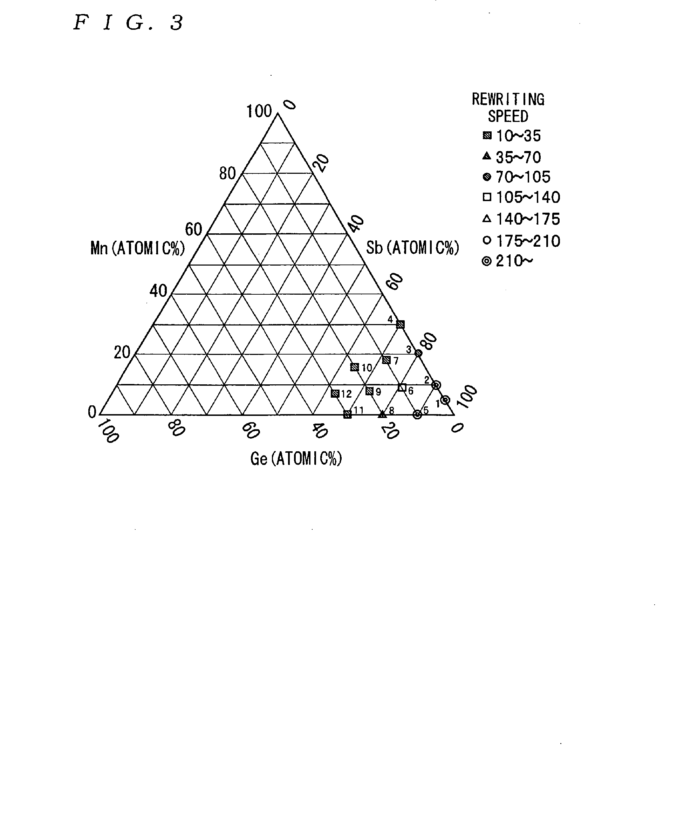

After the respective recording layers 5 of the samples were initialized (crystallized) using a bulk eraser, the samples were placed on an optical recording medium evaluator, one after another, for recording under the conditions of a laser wavelength of 405 nm, a numerical aperture NA of 0.85, and a recording signal using (1, 7) RLL modulation signal. A recording/erasing linear velocity was optimized on a sample-by-sample basis. Then, a laser beam was irradiated onto each of the samples having data recorded thereon while varying the linear velocity, to erase the data, and when the data was erased up to -30 dB, the linear velocity was measured to thereby calculate a maximum rewriting speed (Mbps). The respective maximum rewriting speeds of the samples are shown in FIG. 2. FIG. 3 show a 3-component composition diagram prepared based on FIG. 2, for illustrating the relationship between the composition of the recording layer 5 and the rewriting speed.

From FIGS. 2 and 3, it is understood that the content a of Sb is within a range of 56 to 95 atomic %, and the contents b, c, of other components i.e. Mn and Ge, as sub-components, are within a range of 5 to 40 atomic %, a sufficient crystallization speed for rewriting of recording information can be positively ensured. Further, it is understood that by setting the sub-component content (b + c) of Mn and/or Ge to 30 atomic % or less, it is possible to realize a high rewriting speed of 25 Mbps or more. Furthermore, it is understood that by setting the sub-component content (b + c) of Mn and/or Ge close to the lower limit of the above range (5 to 10 atomic %), as in the case of Samples No. 1, No.2, and No.5, it is possible to realize a high rewriting speed in excess of 200 Mbps. On the other hand, when the sub-component content (b + c) of Mn and/or Ge is set below the lower limit (5 atomic %) of the above range as in the case of Sample No. 13, it is understood that rewriting cannot be performed. Moreover, as a result of execution of high temperature storage tests on all the samples, it was confirmed that Samples No. 1 to No. 12 have sufficient storage characteristics. On the other hand, from Sample No. 13 subjected to the high temperature storage test, data recorded thereon (recorded data) could not be read out (recorded marks were erased by crystallization). Therefore, in order to more positively ensure sufficient storage characteristics of the optical recording medium, it is preferred that the sub-component content (b + c) of Mn and/or Ge is set to 10 atomic % or more.

## Claims

1. An optical recording medium having a phase-change recording layer formed such that a reversible phase change thereof between an amorphous phase and a crystalline phase can be utilized,
wherein the phase-change recording layer contains Sb as a main component and at least one element selected from the group consisting of elements of other groups than group VIb and rare earth metal elements, as a sub-component.

2. An optical recording medium according to claim 1,
wherein the sub-component is at least one element selected between Mn and Ge.

3. An optical recording medium according to either claim 1 or claim 2,
wherein a content of the selected element in the recording layer is within a range of 5 to 40 atomic %.

4. An optical recording medium according to claim 3,
wherein the content of the selected element is within a range of 10 to 30 atomic %.

5. An optical recording medium according to any of claim 1 to claim 4,
wherein the recording layer contains at least one element M selected from In and Ag, and is formed such that a content of the at least one element M is more than 0 atomic % and equal to or less than 15 atomic %.
